# EUROPÄISCHE PATENTSCHRIFT

(11) **EP 3 240 717 B1**
(45) Veröffentlichungstag und Bekanntmachung des Hinweises auf die Patenterteilung: **22.08.2018**
(21) Anmeldenummer: 15828631.0
(22) Anmeldetag: 29.12.2015
(51) Int. Cl.: B61B 7/00, B61B 12/00, B61B 12/06

(54) **LUFTFAHRTHINDERNISKENNZEICHNUNG**
AVIATION OBSTRUCTION MARKING
RECONNAISSANCE D'OBSTACLES À LA NAVIGATION AÉRIENNE

(30) Priorität: 29.12.2014 AT 9352014
(43) Veröffentlichungstag der Anmeldung: 08.11.2017
(73) Patentinhaber: Ortner, Christian, 6020 Innsbruck (AT)
(72) Erfinder: Ortner, Christian, 6020 Innsbruck (AT)
(74) Vertreter: Torggler & Hofinger Patentanwälte
(86) Internationale Anmeldenummer: PCT/AT2015/000164
(87) Internationale Veröffentlichungsnummer: WO 2016/106435

(56) Entgegenhaltungen:
- AT-B- 385 367
- DE-U1-202005 019 193
- US-A1- 2015 097 692

## Beschreibung

Die Erfindung betrifft eine Luftfahrthinderniskennzeichnung für Tragseile von Seilbahnen, mit einem auf dem Tragseil verfahrbaren Fahrwerk, an dem über eine Gehänge ein Fahrbetriebsmittel, insbesondere eine Gondel hängt. Weiters betrifft die Erfindung eine damit ausgestattete Seilbahnanlage.
In der Luft gespannte Seile stellen, namentlich wenn sie eine gewisse Höhe über Grund erreichen, eine beträchtliche Gefahr für Luftfahrzeuge dar. Diese Gefahr wurde in den vergangenen 20 Jahren durch die Verbreitung der Rettung von Verletzten aus der Luft mittels Hubschrauber verschärft, was in Österreich sogar dazu geführt hat, dass Seile und Drahtverspannungen, wenn sie in Gebieten liegen, wo Rettungshubschrauber operieren, bereits ab einer Höhe von 10m über Grund gesetzlich als Luftfahrthindernisse definiert wurden (§ 85 Abs. 3 LFG). Dies macht vielfach die nachträgliche Kennzeichnung bestehender Seilbahnanlagen notwendig.

Das Dokument AT 385 367 B beschreibt eine Warneinrichtung für Hochspannungsleitungen oder Seilbahnen, bestehend aus einer Reihe von Warnkugeln, die über ein Laufwerk an einem Tragseil verschiebbar aufgehängt sind und die in Abständen voneinander mit einem Zugseil verbunden sind. Als Hinderniskennzeichnung direkt an Seilen sind die in Kapitel 4 des Annex 14 zum Vertrag von Chicago beschriebenen Warnkugeln bekannt und verbreitet. Die Anbringung solcher Kugeln an Tragseilen von Seilbahnen ist jedoch nicht möglich, es bedarf daher z.B. eines eigenen sogenannten Warnkörperseiles. Vor allem die nachträgliche Anbringung eines solchen Seiles stößt auf große technische (statische Auslegung der Stützen), wirtschaftliche und rechtliche (Natur- und Landschaftsschutz) Hindernisse.

Die Erfindung ist durch die Merkmale des Anspruchs 1 definiert und beschreibt eine Möglichkeit der Anbringung von Warnkörpern ähnlich denen wie in Annex 14 beschrieben mittels bekannter überfahrbarer Seilklemmen, wie sie z.B. bei sog. Seilreitern Anwendung finden und z.B. in DIN EN 13796-1 Kap. 7.4.1.12 beschrieben sind, direkt an Tragseilen von Zweiseilbahnen, die vom Fahrbetriebsmittel durchfahren werden können und die sich auch für die nachträgliche Anbringung mit vergleichsweise geringem Aufwand an bestehenden Anlagen eignen.
Der Warnkörper ist dazu mit einem tunnelartigen Ausschnitt versehen, innerhalb dessen von einer Seite ein Tragarm von unten mittels einer üblichen überfahrbaren Seilklemme (wie z.B. in DIN EN 13796-1 unter 7.4,1,12 beschrieben) das Tragseil umfasst, der so gestaltet ist, dass eine hindernisfreie Durchfahrt des Fahrbetriebsmittels der Seilbahn ermöglicht wird.
In vielen Fällen ist es sinnvoll, die Warnkörper als Träger von Lichtsignalanlagen auszubilden, die z.B. gemäß DE202005019193U1 bedarfsgesteuert Lichtsignale abgeben, sobald sich ein Luftfahrzeug nähert. Die geringe Einschaltdauer solcher Einrichtungen erlaubt die Energieversorgung der Anlage über außen am Warnkörper angebrachte Solarzellen. Eine solche Kombination erlaubt wegen der wesentlich verbesserten Sichtbarkeit (auch in der Nacht) die drastische Reduktion der Zahl der anzubringenden Warnkörper gegenüber den Vorgaben des Annex 14 (z.B. alle 200m statt alle 40m), was zusammen mit der Auslösung der Lichtsignale nur bei Bedarf den Problemen des Natur- und Landschaftsschutzes begegnet und zumeist die statischen Reserven des Tragseiles (Gewicht, Wind- und Eislasten) nicht überbeansprucht.

Daneben kann der Warnkörper auch als Träger für seilbahntechnische Einrichtungen o.ä.(z.B. zur Windmessung) dienen.

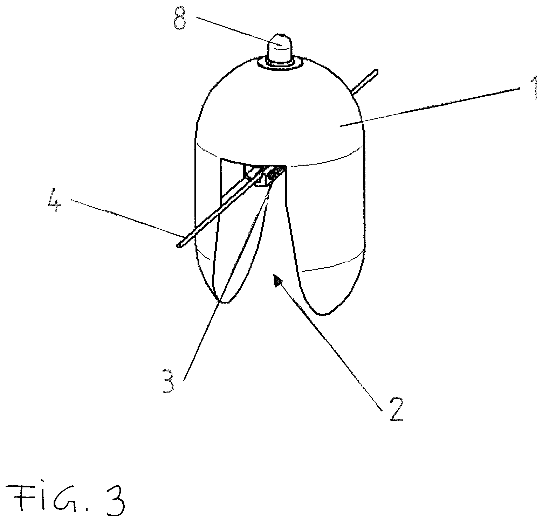

Eine vorteilhafte Ausführungsform sieht vor, die Warnkörper durch Wahl der Größe und ggf. Anpassung der Form wie in Fig. 3 so auszubilden, dass Windangriffsschwerpunkt und Massenschwerpunkt unterhalb der Seilachse liegen, um Schwingungen und eine gegenläufige Auslenkung von Warnkörper und Fahrbetriebsmittel bei Seitenwind zu vermeiden.

Technische Aufgabe der Erfindung ist die Hinderniskennzeichnung von Seilen von Seilbahnen direkt am Tragseil unter Vermeidung eigener Trägereinrichtungen (Seil, Masten o.ä.).

Die Erfindung und deren Vorteile werden anhand von Ausführungsbeispielen gemäß den Zeichnungen näher erläutert.
Die Fig. 1 zeigt in einer perspektivischen Ansicht ein Ausführungsbeispiel einer erfindungsgemäßen Luftfahrthinderniskennzeichnung.
Die Figur 2 zeigt eine entsprechende stirnseitige Ansicht.
Die Figur 3 zeigt in einer perspektivischen Ansicht ein weiteres Ausführungsbeispiel.
Die Figuren 4a und 4b zeigen weitere Ausführungsbeispiele einer erfindungsgemäßen Luftfahrthinderniskennzeichnung in einer perspektivischen Ansicht bzw. in einer stirnseitigen Ansicht.
Die Figur 5 zeigt eine perspektivische Ansicht einer erfindungsgemäßen Seilbahnanlage mit einer Luftfahrthinderniskennzeichnung die gerade vom Fahrwerk eines Fahrbetriebsmittels durchfahren wird.
Die Figur 6 zeigt ein weiteres Ausführungsbeispiel einer erfindungsgemäßen Luftfahrthinderniskennzeichnung mit einer gelenkigen Lagerung des Drahtarmes, Zusatzgewichten zur Erniedrigung des Schwerpunkts und Einlaufschrägen für eine sichere Durchfahrt des Fahrwerks.
Die Figuren 7a und 7b zeigen in einer schematischen stirnseitigen Ansicht ein Ausführungsbeispiel einer erfindungsgemäßen Luftfahrthinderniskennzeichnung in verschiedenen Torsionszuständen des Tragseiles und damit der daran festgeklemmten Seilklemme.

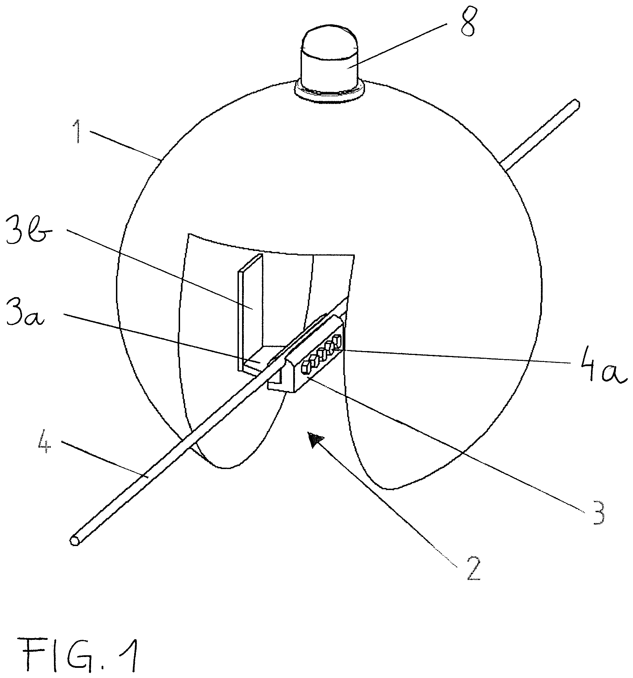

Die Fig. 1 zeigt die Ausbildung der Erfindung als im Grunde kugelförmiger Körper unter Zugrundelegung der Proportionen eines beispielhaft 60cm Warnkörpers 1 an einem 14mm Tragseil 4 einer üblichen Materialseilbahn mit 250 kg Nutzlast in perspektivischer Ansicht. Ersichtlich ist der tunnelartige Ausschnitt 2, durch den das Tragseil 4 führt und an dem mittels einer überfahrbaren Seilklemme 3 an einem Tragarm 3a, 3b von unten der Warnkörper 1 von einer Seite erfasst wird, während die andere Seite frei bleibt, um die Durchfahrt des Fahrwerks 5 (samt Gehänge 7) der Seilbahn zu ermöglichen.

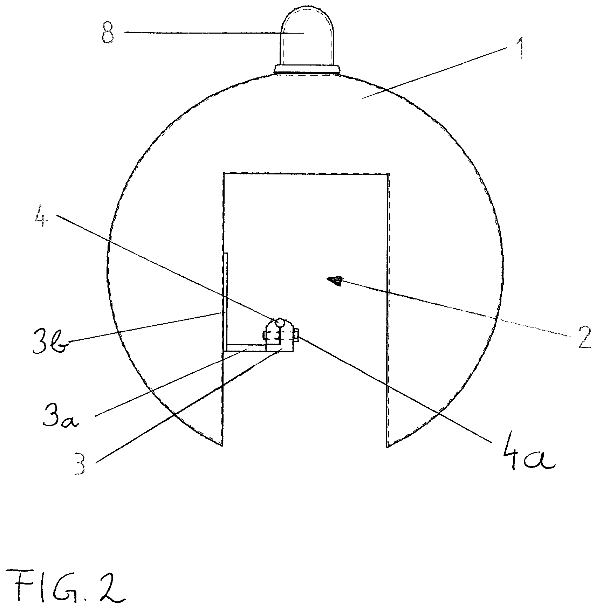

Der Tragarm ist bei den in den Figuren 1 und 2 dargestellten Ausführungsbeispielen im Wesentlichen L-förmig ausgebildet, wobei die beiden Tragarmteile 3a und 3b im rechten Winkel zueinander angeordnet sind. Die Seilklemme 4 kann über Schrauben 4a am Tragseil 4 festgeklemmt werden.

Der Warnkörper 1 selbst kann aus einem leichten Kunststoffmaterial gefertigt sein, während die tragenden Teile 3, 3a, 3b vorzugsweise aus Metall bestehen.

Am oberen Bereich des Warnkörpers 1 kann eine Hindernisbefeuerung in Form eines Leuchtmittels 8 befestigt sein.

Die Fig. 3 zeigt eine Variante mit einem zwischen zwei 60 cm Halbkugeln angeordneten zylindrischen Abschnitt zur Vergrößerung der Fläche für die Anbringung von Solarzellen und zur Beeinflussung der Schwerpunktlage.

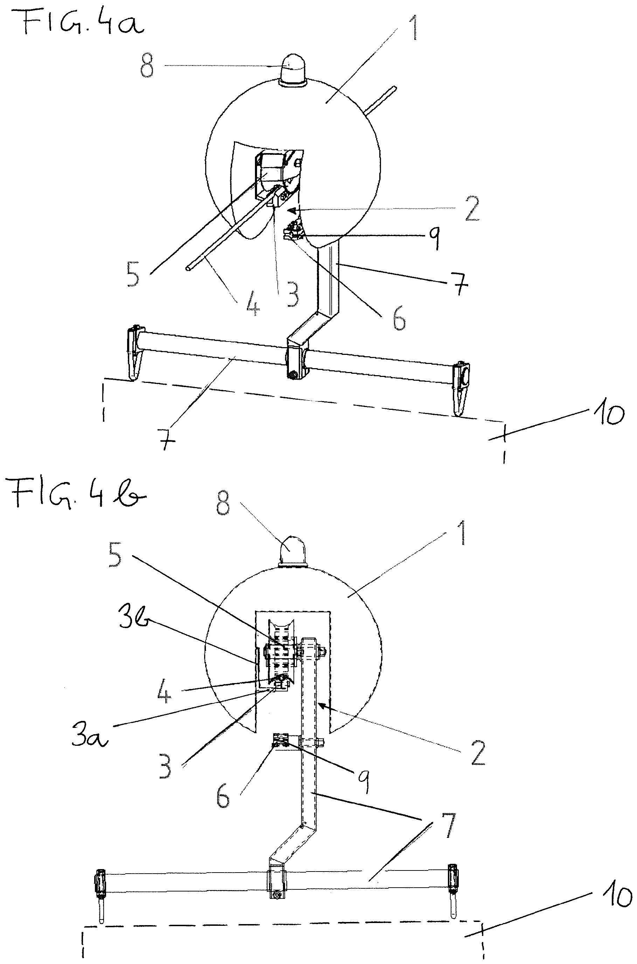

Die Fig. 4a und Fig. 4b zeigen ein Ausführungsbeispiel der Erfindung zusammen mit dem Fahrwerk 5 des Fahrbetriebsmittels 10, dem Gehänge 7 und der Seilklemme 6 des Zugseiles 9 in verschiedenen Ansichten.

In Fig. 4b sieht man besonders gut wie das Fahrwerk 5 samt Gehänge 7 durch den Ausschnitt 2 in Warnkörper 1 passieren kann, obwohl auch der Warnkörper 1 selbst über die Seilklemme 3 an Tragseil 4 mittels der Tragarmteile 3a und 3b befestigt ist.

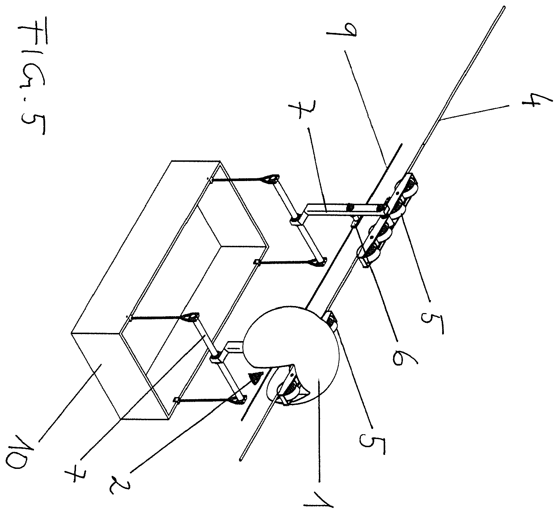

In Fig. 5 ist ein Ausführungsbeispiel einer erfindungsgemäßen Seilbahnanlage gezeigt, bei dem ein in Längsrichtung im Wesentlichen unbewegliches Tragseil 4 und ein bewegliches, angetriebenes Zugseil 9 vorgesehen ist. Auf dem Tragseil ist ein Fahrbetriebsmittel (hier ein Behälter einer Materialseilbahn) über ein Gehänge 7 und zwei Fahrwerke 5 verfahrbar, wobei die gesamte Fahrbetriebsmitteleinheit über das Zugseil ziehbar ist, das über eine Seilklemme 6 mit dem Gehänge 7 in Verbindung steht.

Auch in Fig. 5 sieht man gut, wie das Fahrwerk durch den Warnkörper 1 bzw. dessen Ausschnitt 2 passieren kann.

Zu den Fahrbetriebsmitteln sei noch erwähnt, dass die Erfindung selbstverständlich nicht auf Materialseilbahnen beschränkt ist. Es können auch andere Gondeln, insbesondere Kabinen für den Personentransport oder auch Sessel zum Einsatz kommen.

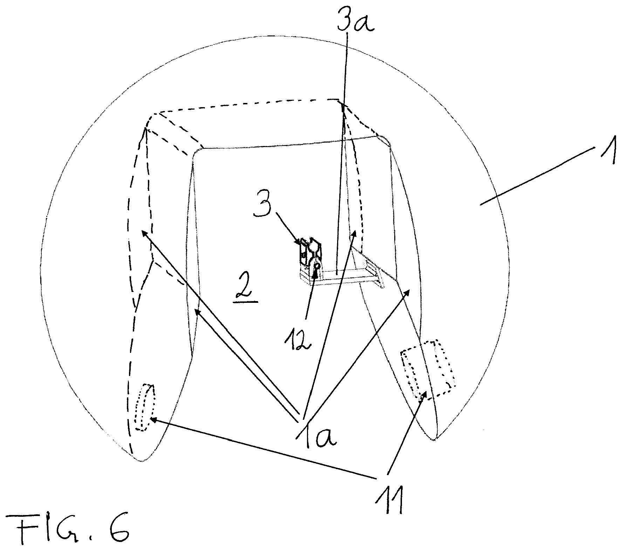

Die Fig. 6 zeigt ein weiteres Ausführungsbeispiel einer erfindungsgemäßen Luftfahrthinderniskennzeichnung. Dieses Ausführungsbeispiel unterscheidet sich von den vorhergehenden Ausführungsbeispielen im Wesentlichen durch Einlaufschrägen 1a am Rand des Ausschnittes 2. Diese erleichtern das Eindringen des Fahrwerks in den kanalartigen Ausschnitt 2 und stellen einen sicherheitstechnischen Aspekt dar.

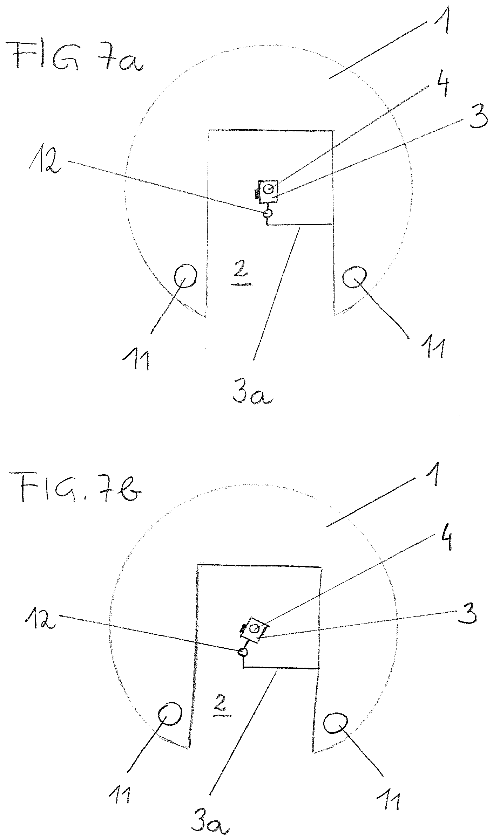

Aus technischer Sicht unterscheidet sich das Ausführungsbeispiel der Fig. 6 von den vorhergehenden Ausführungsbeispielen im Wesentlichen durch ein Gelenk 12 zwischen der Seilklemme 3 und dem Tragarm 3a sowie durch Zusatzgewichte 11 im unteren Bereich des Warnkörpers 1, die den Schwerpunkt tief absenken, jedenfalls weit unterhalb dem Bereich des Tragseiles bzw. der Seilklemme 3 für das Tragseil. Mit dieser Konstruktion gemäß der Fig. 6 erzielt man die in den Fig. 7a und 7b dargestellten Vorteile:
In den dortigen Figuren sind die Verhältnisse schematisch dargestellt. Die Fig. 7a zeigt in einer stirnseitigen Ansicht im Wesentlichen den Normalzustand, bei dem die Seilklemme 3 "gerade" am Tragseil 4 hängt.

Kommt es zu Torsionen des Tragseiles, verkippt die daran festgeklemmte Seilklemme 3, so wie dies in Figur 7b dargestellt ist. Das Gelenk 12 kompensiert nun dieses Verkippen und verhindert, dass damit auch der Warnkörper und dessen Ausschnitt um eine Längsachse verdreht wird. Vielmehr bleibt der Warnkörper 1 im Wesentlichen senkrecht stehen, die tiefliegenden Gewichte 11 stellen diese stabile Lage unabhängig vom Torsionszustand des Tragseiles und der Lage der Seilklemme her. Damit wird auch bei Torsionen des Tragseils eine sichere Durchfahrt des Fahrwerks und des Gehänges von Fahrbetriebsmitteln ermöglicht.

## Patentansprüche

1. Luftfahrthinderniskennzeichnung für Tragseile (4) von Seilbahnen, mit einem auf dem Tragseil (4) verfahrbaren Fahrwerk (5), an dem über eine Gehänge (7) ein Fahrbetriebsmittel (10), insbesondere eine Gondel hängt, **dadurch gekennzeichnet, dass** ein mit einem Ausschnitt (2) versehener Warnkörper (1) vorgesehen ist, durch den das Tragseil (4) führt und der innerhalb des Ausschnitts (2) einseitig von unten mittels einer überfahrbaren Seilklemme (3) direkt an das Tragseil (4) geklemmt wird, wobei der Ausschnitt (2) so gestaltet ist, dass er die Durchfahrt des Fahrwerks (5) der Seilbahn ermöglicht.

2. Luftfahrthinderniskennzeichnung nach Anspruch 1, **dadurch gekennzeichnet, dass** zumindest ein Warnkörper (1) als Behältnis und/oder Träger einer Hindernisbefeuerung, insbesondere in Form eines Leuchtmittels (8), ausgebildet ist.

3. Luftfahrthinderniskennzeichnung nach Anspruch 1 oder 2, **dadurch gekennzeichnet, dass** an zumindest einem Warnkörper (1) Sensoren und Übertragungseinrichtungen von Daten, insbesondere Wetterdaten, angeordnet sind.

4. Luftfahrthinderniskennzeichnung nach einem der Ansprüche 1 bis 3, **dadurch gekennzeichnet, dass** die Seilklemme (3) für das Tragseil (4) über einen Tragarm (3a, 3b) mit dem Warnkörper (1) in Verbindung steht.

5. Luftfahrthinderniskennzeichnung nach Anspruch 4, **dadurch gekennzeichnet, dass** der Tragarm zwei L-förmig angeordnete Tragarmteile (3a, 3b) aufweist.

6. Luftfahrthinderniskennzeichnung nach einem der Ansprüche 1 bis 5, **dadurch gekennzeichnet, dass** im Bereich der Seilklemme (3) für das Tragseil (4) - und vorzugsweise unter der Seilklemme (4) - ein Gelenk (12) angeordnet ist, über das der Warnkörper (1) bzw. ein daran angebrachter Tragarm (3a) gelenkig mit der Seilklemme (3) in Verbindung steht.

7. Luftfahrthinderniskennzeichnung nach Anspruch 6, **dadurch gekennzeichnet, dass** das Gelenk (12) als Achsgelenk ausgebildet ist.

8. Luftfahrthinderniskennzeichnung nach Anspruch 7, **dadurch gekennzeichnet, dass** die Gelenkachse des Gelenkes (12) parallel zum Tragseil (4) verläuft.

9. Luftfahrthinderniskennzeichnung nach einem der Ansprüche 1 bis 8, **dadurch gekennzeichnet, dass** der Warnkörper (1) am Rand des Ausschnitts (2) Einlaufschrägen (1a) aufweist, die zur Richtung des Tragseiles (4) geneigt angeordnet sind.

10. Luftfahrthinderniskennzeichnung nach einem der Ansprüche 1 bis 9, **dadurch gekennzeichnet, dass** der Warnkörper (1) samt allfälligem Tragarm (3a, 3b) einen Schwerpunkt aufweist, der unterhalb der Seilklemme (3) für das Tragseil (4) liegt.

11. Luftfahrthinderniskennzeichnung nach Anspruch 10, **dadurch gekennzeichnet, dass** der Tragkörper (1) unterhalb der Seilklemme (3) für das Tragseil (4) zumindest ein Gewicht, vorzugsweise beidseitig vom Ausschnitt (2) jeweils ein Gewicht (11), aufweist.

12. Luftfahrthinderniskennzeichnung nach einem der Ansprüche 1 bis 11, **dadurch gekennzeichnet, dass** die Außenkontur des Warnkörpers (1) im Wesentlichen kugelförmig ist und/oder die Querschnittsform des Ausschnitts (2) im Wesentlichen rechteckig ist.

13. Seilbahnanlage mit einem in Längsrichtung im Wesentlichen unbeweglichen Tragseil (4) und einem in Längsrichtung bewegten Zugseil (9), mit mindestens einem Fahrbetriebsmittel (10), das mittels eines Fahrwerks (5) auf dem Tragseil (4) verfahrbar ist, wobei es vom Zugseil (9) gezogen wird, **dadurch gekennzeichnet, dass** auf dem Tragseil (4) zumindest eine Luftfahrthinderniskennzeichnung nach einem der Ansprüche 1 bis 12 angeordnet ist.

## Claims

1. An aviation obstruction marking for support cables (4) of cableways, comprising a travel assembly (5) which is displaceable on the support cable (4) and from which an operational travel means (10), in particular a gondola, is supported by way of a suspension means (7), **characterised in that** there is provided a warning body (1) provided with an opening (2), through which the support cable (4) leads and which is clamped directly to the support cable (4) at one side from below within the opening (2) by means of an overrideable cable clamp (3), wherein the opening (2) is of such a configuration that it permits the travel assembly (5) of the cableway to pass therethrough.

2. The aviation obstruction marking according to claim 1 **characterised in that** at least one warning body (1) is in the form of a container and/or carrier of an obstacle beacon, in particular in the form of a lighting means (8).

3. The aviation obstruction marking according to claim 1 or claim 2 **characterised in that** sensors and transfer devices of data, in particular weather data, are arranged on at least one warning body (1).

4. The aviation obstruction marking according to one of claims 1 to 3 **characterised in that** the cable clamp (3) for the support cable (4) is connected to the warning body (1) by way of a support arm (3a, 3b).

5. The aviation obstruction marking according to claim 4 **characterised in that** the support arm has two support arm portions (3a, 3b) arranged in an L-shape.

6. The aviation obstruction marking according to one of claims 1 to 5 **characterised in that** disposed in the region of the cable clamp (3) for the support cable (4) - and preferably under the cable clamp (4) - is a joint (12), by way of which the warning body (1) or a support arm (3a) mounted thereto is hingedly connected to the cable clamp (3).

7. The aviation obstruction marking according to claim 6 **characterised in that** the joint (12) is in the form of swivel joint.

8. The aviation obstruction marking according to claim 7 **characterised in that** the swivel axis of the joint (12) extends parallel to the support cable (4).

9. The aviation obstruction marking according to one of claims 1 to 8 **characterised in that** the warning body (1) at the edge of the opening (2) has inclined run-in portions (1a) which are arranged inclinedly relative to the direction of the support cable (4).

10. The aviation obstruction marking according to one of claims 1 to 9 **characterised in that** the warning body (1) together with a possible support arm (3a, 3b) has a centre of gravity which is below the cable clamp (3) for the support cable (4).

11. The aviation obstruction marking according to claim 10 **characterised in that** the warning body (1) beneath the cable clamp (3) for the support cable (4) has at least one weight, preferably a respective weight (11) at both sides of the opening (2).

12. The aviation obstruction marking according to one of claims 1 to 11 **characterised in that** the outside contour of the warning body (1) is substantially ball-shaped and/or the cross-sectional shape of the opening (2) is substantially rectangular.

13. A cableway installation comprising a support cable (4) which is substantially immobile in the longitudinal direction, and a pull cable (9) which is moved in the longitudinal direction, with at least one operational travel means (10) which is displaceable on the support cable (4) by means of a travel assembly (5), wherein it is pulled by the pull cable (9), **characterised in that** at least one aviation obstruction marking according to one of claims 1 to 12 is arranged on the support cable (4).

## Revendications

1. Identificateur d'obstacles à la navigation aérienne pour des câbles porteurs (4) de téléphérique, avec un train de roulement (5) pouvant être déplacé sur le câble porteur (4), au niveau duquel est suspendue par une suspente (7), une cabine (10), en particulier une télécabine, **caractérisée en ce qu'**un corps d'avertissement (1) doté d'une découpe (2) est prévu, au travers duquel passe le câble porteur (4) et est serré à l'intérieur de la découpe (2) unilatéralement du dessous, au moyen d'un serre-câble (3) qui peut être serré, directement sur le câble porteur (4), dans lequel la découpe (2) est configurée de telle sorte qu'elle permette le passage du train de roulement (5) du téléphérique.

2. Identificateur d'obstacles à la navigation aérienne selon la revendication 1, **caractérisée en ce que** au moins un corps d'avertissement (1) est conçu en tant que récipient et/ou support d'un balisage d'obstacles, en particulier sous la forme d'un élément lumineux (8).

3. Identificateur d'obstacles à la navigation aérienne selon la revendication 1 ou 2, **caractérisée en ce que** sur au moins un corps d'avertissement (1), des capteurs et des systèmes de transmission de données, en particulier, de données météorologiques, sont disposés.

4. Identificateur d'obstacles à la navigation aérienne selon l'une quelconque des revendications 1 à 3, **caractérisée en ce que** le serre-câble (3) pour le câble porteur (4) est relié au corps d'avertissement (1) par l'intermédiaire d'un bras de support (3a, 3b).

5. Identificateur d'obstacles à la navigation aérienne selon la revendication 4, **caractérisée en ce que** le bras de support présente deux parties de bras de support (3a, 3b) disposées en forme de L.

6. Identificateur d'obstacles à la navigation aérienne selon l'une quelconque des revendications 1 à 5, **caractérisée en ce que**, dans la zone du serre-câble (3) pour le câble porteur (4), et de préférence sous le serre-câble (4), est disposée une articulation (12) par laquelle le corps d'avertissement (1) ou un bras de support (3a) monté sur celui-ci est relié de façon articulée avec le serre-câble (3).

7. Identificateur d'obstacles à la navigation aérienne selon la revendication 6, **caractérisée en ce que** l'articulation (12) est conçue comme une articulation à axe.

8. Identificateur d'obstacles à la navigation aérienne selon la revendication 7, **caractérisée en ce que** l'axe d'articulation de l'articulation (12) évolue parallèlement au câble porteur (4).

9. Identificateur d'obstacles à la navigation aérienne selon l'une quelconque des revendications 1 à 8, **caractérisée en ce que** le corps d'avertissement (1) présente, sur le bord de la découpe (2), des biseaux d'engagement (1a) qui sont disposés de façon inclinée en direction du câble porteur (4).

10. Identificateur d'obstacles à la navigation aérienne selon l'une quelconque des revendications 1 à 9, **caractérisée en ce que** le corps d'avertissement (1), y compris l'éventuel bras de support (3a, 3b), présente un point de gravité qui se situe en dessous du serre-câble (3) pour le câble porteur (4).

11. Identificateur d'obstacles à la navigation aérienne selon la revendication 10, **caractérisée en ce que** le corps de support (1) présente sous le serre-câble (3) pour le câble porteur (4) au moins un poids, de préférence un poids (11), respectivement, des deux côtés de la découpe (2).

12. Identificateur d'obstacles à la navigation aérienne selon l'une quelconque des revendications 1 à 11, **caractérisée en ce que** le contour externe du corps d'avertissement (1) est sensiblement de forme sphérique et/ou la forme de section de la découpe (2) est sensiblement rectangulaire.

13. Installation de téléphérique avec un câble porteur (4) sensiblement non mobile dans la direction longitudinale et un câble de traction mobile (9) dans la direction longitudinale, comportant au moins un élément mouvant (10) qui peut être déplacé sur le câble porteur (4) au moyen d'un train de roulement (5), dans laquelle il est tiré par le câble de traction (9), **caractérisée en ce que** sur le câble porteur (4) est disposée au moins une Identificateur d'obstacles à la navigation aérienne selon l'une quelconque des revendications 1 à 12.
